# EUROPÄISCHE PATENTANMELDUNG

(11) **EP 1 209 411 A2**
(43) Veröffentlichungstag der Anmeldung: **29.05.2002**
(21) Anmeldenummer: 01127649.0
(22) Anmeldetag: 20.11.2001
(51) Int. Cl.: F21V 23/04, F21V 33/00

(54) **Nachtlichteinrichtung**

(30) Priorität: 22.11.2000 DE 20019887 U
(71) Anmelder: Seppeler, Michael, 50677 Köln (DE)
(72) Erfinder: Seppeler, Michael, 50677 Köln (DE)
(74) Vertreter: Hennicke, Ernst Rüdiger,Dipl.-Ing.

(57) **Zusammenfassung**

Die erfindungsgemäße Nachtlichteinrichtung insbesondere für Kinder hat die Aufgabe, das Einschlafen insbesondere von Babys und Kleinkindern positiv zu beeinflussen, ohne auf den Schlaf nach dem Einschlafen einen negativen Einfluß zu haben. Hierzu weist die Nachtlichteinrichtung (10) eine die Lichtintensität (L) des Leuchtmittels (11) während eines vorbestimmten Zeitraums (Δt) verringernde Dimmerschaltung (21) auf, die bewirkt, daß die Helligkeit des Leuchtmittels (11) während eines vorbestimmten Zeitraums (Δt) nach und nach verringert wird, was zur Folge hat, daß Kinder leichter einschlafen und von keinem Leuchtmittel während der Nacht gestört werden.

## Beschreibung

Die Erfindung betrifft eine Nachtlichteinrichtung, insbesondere für Kinder, die mindestens ein Leuchtmittel aufweist.

Es gibt viele Babys und insbesondere kleinere Kinder, die in der Dunkelheit Angst haben und daher in einem dunklen Raum nicht einschlafen können oder wollen. Viele Eltern lassen daher ihre Kinder bei dem Licht einer eingeschalteten Lampe oder eines speziellen Nachtlichtes einschlafen, das jedenfalls so hell ist, daß sich die Kinder im Raum orientieren können und in dem Leuchtmittel des Nachtlichtes einen Bezugspunkt im Raum haben.

Das Schlafen bei Licht, auch bei den nicht besonders leuchtintensiven Nachtlichtern, ist aus medizinischen Gründen nicht zu empfehlen, denn die Tiefe des Schlafes auch im nur gering beleuchteten Raum ist geringer als bei vollständiger Dunkelheit. Es hat sich gezeigt, daß kleine Kinder bei Licht zwar möglicherweise schneller einschlafen, jedoch nicht in so tiefen Schlaf verfallen wie im dunklen Raum und von dem die Nacht über brennenden Licht auch häufig aus dem Schlaf geweckt werden. Darüber hinaus fühlen sich viele Kinder, denen man das Nachtlicht als Einschlafhilfe zugesteht, von diesem keineswegs zum Einschlafen stimuliert, sondern nehmen die Beleuchtung gleichbleibender Helligkeit zum Anlaß, in ihrem Bett herumzuspielen od.dgl..

Aufgabe der Erfindung ist es, eine Nachtlichteinrichtung zu schaffen, die das Einschlafen insbesondere von Babys und Kleinkindern positiv beeinflußt und die den Schlaf nach dem Einschlafen nicht weiter negativ beeinflußt.

Diese Aufgabe wird mit der Erfindung durch eine die Lichtintensität des Leuchtmittels während eines vorbestimmten Zeitraums verringernde Dimmerschaltung gelöst.

Mit der Dimmerschaltung wird das Leuchtmittel während des vorbestimmten Zeitraums nach und nach verringert. Die das Dunkelwerden in der Natur am Ende eines Tages nachahmende Verringerung der Lichtintensität hat nach medizinischen Erkenntnissen den Effekt, daß die Zirbeldrüse im Gehirn des Menschen einen Stoff ausschüttet, der ihn zunehmend müde werden läßt und das Einschlafen begünstigt. Am Ende des voreingestellten Zeitraums ist das Leuchtmittel entweder ganz ausgeschaltet oder auf eine so geringe Lichtintensität gedimmt, daß es das Schlafverhalten des Babys, Kleinkinds od.dgl. nicht mehr beeinflußt.

Zweckmäßig ist der Zeitraum einstellbar, währenddessen die Lichtintensität des Leuchtmittels verringert wird. Die Eltern des Kindes können somit wählen, wie schnell es im Zimmer ihres Kindes dunkel werden soll. Vorzugsweise ist auch die Lichtintensität des Leuchtmittels zu Beginn und/oder am Ende des Zeitraumes einstellbar. Man kann also beispielsweise das Licht zu Beginn des Zeitraums noch so hell sein lassen, daß das Kind in seinem Bett noch ein Buch anschauen oder mit seinen Kuscheltieren spielen kann, oder das Leuchtmittel wird alternativ zu Beginn des Zeitraums schon so dunkel eingestellt, daß es lediglich noch eine ausreichend gute Orientierung im Raum ermöglicht, so daß das Kind beim Einschlafen erkennen kann, wo es sich befindet. Am Ende des Dimmvorgangs kann das Leuchtmittel entweder vollständig ausgeschaltet sein oder noch sehr schwach leuchten, wenn dies im Einzelfall gewünscht wird.

Die Einstellung des Zeitraums, innerhalb dessen der Dimmvorgang erfolgt, wie auch die Einstellung der Anfangs- und Endhelligkeit des Leuchtmittels kann über Taster, Wippschalter, Drehschalter od.dgl. erfolgen, die an einem die Dimmerschaltung aufnehmenden Gehäuse von außen zugänglich angeordnet sind, wobei die Anordnung zweckmäßig so getroffen ist, daß die Einstellungen vom Kind nicht verändert werden können.

Das Leuchtmittel kann an einem die Dimmerschaltung aufnehmenden Gehäuse angeordnet sein, es ist aber auch möglich, an der Einrichtung einen Anschluß für das dann extern angeordnete Leuchtmittel vorzusehen. In letztgenanntem Fall kann das Leuchtmittel beispielsweise aus einer Nachttischlampe od.dgl. bestehen, während die Dimmerschaltung als Schaltkästchen ausgestaltet ist, das zwischen die Nachtischlampe und die Steckdose eingeschaltet ist.

Vorzugsweise ist die erfindungsgemäße Einrichtung mit einem auf das Leuchtmittel wirkenden Geräuschsensor versehen, der das Leuchtmittel wieder einschaltet bzw. heller werden läßt, wenn des Nachts Geräusche einer bestimmten Mindestlautstärke im Schlafzimmer des Kindes auftreten. Sollte das Kind also nachts aufwachen und zu schreien beginnen, schaltet der Geräuschsensor das Leuchtmittel wieder ein, so daß das Kind sich in dem dann nicht mehr dunklen Zimmer wieder ohne Angst vor der Dunkelheit orientieren kann. Zweckmäßig wird dabei gleichzeitig die Dimmerschaltung erneut aktiviert, die die Helligkeit des Leuchtmittels erneut während des vorbestimmten Zeitintervalls verringert.

Eine besonders vorteilhafte Ausgestaltung der Erfindung ergibt sich durch eine der Einrichtung zugeordnete Lichtweckerschaltung. Eine solche Lichtweckerschaltung, die die Umkehrung des Prinzips der Dimmerschaltung darstellt, sorgt dafür, daß das Leuchtmittel zu einem vorbestimmten, einstellbaren Zeitpunkt zunehmend heller wird, wodurch die Zirbeldrüse im Gehirn des Menschen angeregt wird, einen Stoff auszuschütten, der den Menschen aus seinem Schlaf weckt. Die erfindungsgemäße Einrichtung gewährleistet somit nicht nur ein leichteres Einschlafen, sondern auch ein behutsames Erwachen aus dem Schlaf am nächsten Morgen.

Der Geräuschsensor ist vorzugsweise einer Geräusch-Überwachungsvörrichtung zugeordnet, d.h. dem Sendeteil eines sogenannten "Babyphon", mit dem es den Eltern eines Kindes möglich ist, auch in einem entfernt gelegenen Raum festzustellen, ob ihr Kind ruhig schläft oder schreit oder andere Geräusche macht. Die Einrichtung kann auch mit einem auf das Leuchtmittel wirkenden Bewegungssensor versehen sein, der für ein Einschalten des Leuchtmittels sorgt, wenn er in seinem Erfassungsbereich eine Bewegung feststellt. Eltern, die des nachts noch einmal nach ihrem Kind sehen wollen, werden dann von einem solchen Bewegungssensor erfaßt, der dann automatisch das Licht einschaltet bzw. heller macht, so daß die Eltern nicht extra eine Lampe im Zimmer des Kindes einschalten müssen.

Weitere Merkmale und Vorteile der Erfindung ergeben sich aus der nachfolgenden Beschreibung und der Zeichnung, worin eine bevorzugte Ausführungsform der Erfindung an einem Beispiel näher erläutert wird. Es zeigt:
- **Fig. 1**: eine Nachtlichteinrichtung nach der Erfindung in einer Vorderansicht;
- **Fig. 2**: ein vereinfachtes Schaltbild der erfindungsgemäßen Nachtlichteinrichtung; und
- **Fig. 3**: die Lichtstärke des mit der erfindungsgemäßen Nachtlichteinrichtung gesteuerten Leuchtmittels in einer graphischen Darstellung in Abhängigkeit von der Zeit.

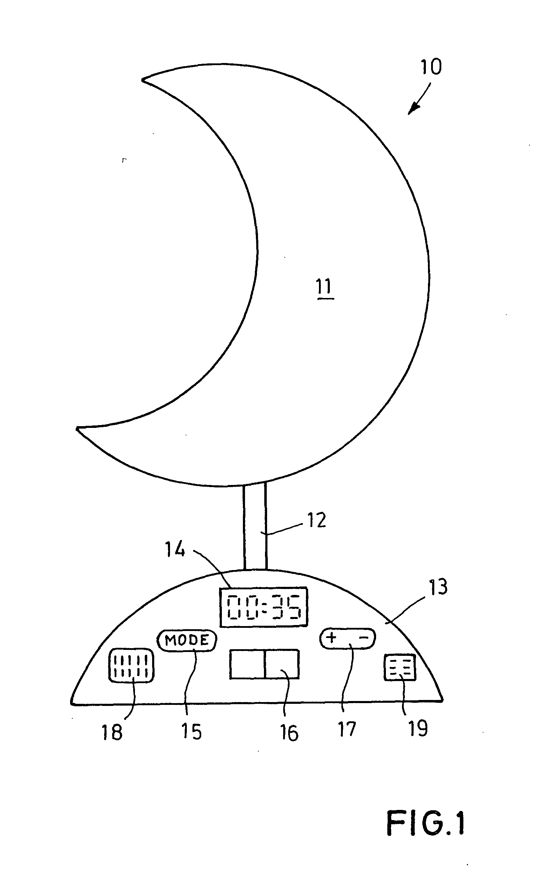

Fig. 1 zeigt ein Nachtlicht 10 für Babys und Kleinkinder, das ein in Form eines Halbmondes ausgebildetes Leuchtmittel 11 aufweist, das mit einem Ständerrohr 12 an einem Sockel 13 befestigt ist. Der Sockel bildet ein Gehäuse, in dessen Inneren eine Schaltung angeordnet ist, die nachfolgend noch näher beschrieben wird und die zum Ein- und Ausschalten des Leuchtmittels 11 dient.

Der Sockel weit ferner eine Multifunktions-Anzeige 14 sowie mehrere Tastschalter 15, 16 und 17 auf, die zum Einstellen der Schaltung im Inneren des Sockels dienen. Darüber hinaus sind im Sockel auch Öffnungen 18, 19 vorgesehen, hinter denen sich an die Schaltung angeschlossene Sensoren befinden.

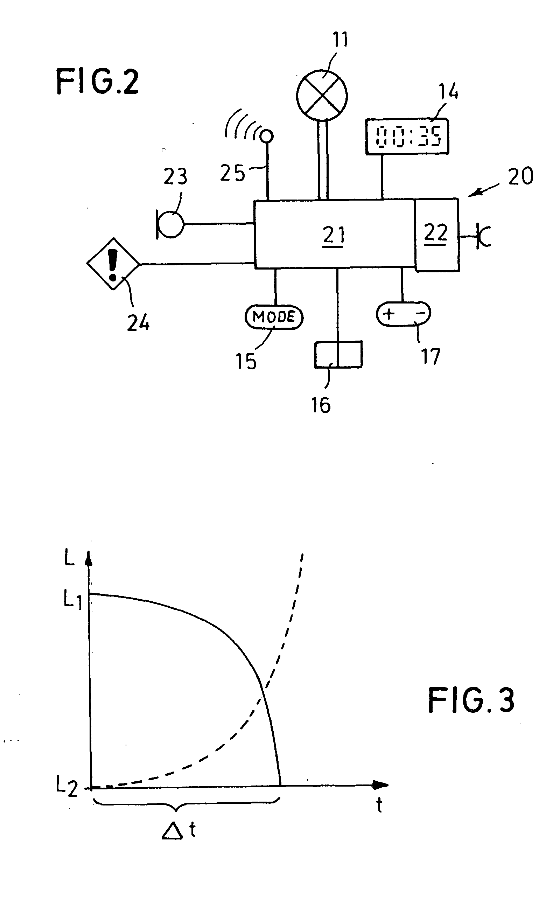

Fig. 2 zeigt das etwas vereinfachte Schaltbild der im Sockel untergebrachten Schaltung 20. Diese besteht im wesentlichen aus einer Dimmerschaltung 21 und einer Lichtweckerschaltung 22, die mit Hilfe der Tastschalter 15 bis 17 eingestellt werden können, wobei die Multifunktionsanzeige 14 die Einstellung erleichtert. Die Dimmerschaltung 21 bewirkt dabei, daß bei Einschalten des Nachtlichtes beim Zubettbringen des Kindes das Leuchtmittel 11 zunächst verhältnismäßig hell leuchtet, die Leuchtintensität L des Leuchtmittels aber dann gem. Fig. 3 während eines vorbestimmten Zeitraums Δt kontinuierlich abnimmt, bis die Lampe entweder vollständig erloschen ist oder einen zuvor mit Hilfe der Tastschalter 15, 16 eingestellten Mindestwert erreicht, mit dem die Lampe während des Rests der Nacht leuchtet. Wie Fig. 3 gut erkennen läßt, erfolgt die Verringerung der Lichtintensität L dabei nicht linear, sondern die Helligkeit nimmt nach Art einer Exponentialfunktion ab, d.h. zu Beginn des Zeitraums Δt ist die Lichtabnahme kaum zu merken, während zum Ende des Zeitraums Δt hin die Helligkeit rapide schwindet.

Mit Hilfe der Lichtweckerschaltung 22 kann das Leuchtmittel 11 zu einer gewünschten, mit Hilfe der Tastschalter 15 und 17 einstellbaren Uhrzeit wieder eingeschaltet werden, wobei auch hier zweckmäßig die Lampe nicht plötzlich mit voller Leuchtstärke erstrahlt, sondern kontinuierlich heller wird und somit die zunehmende Helligkeit zu Beginn eines Tages simuliert. Dieser Vorgang ist in Fig. 3 gestrichelt dargestellt.

Die Schaltung 20 ist zusätzlich noch an einen Geräuschsensor 23 und einen Bewegungssensor 24 angeschlossen, die hinter den Öffnungen 18, 19 im Gehäusesockel 13 angeordnet sind und auf Geräusche bzw. Bewegungen in dem Raum reagieren, in dem sich das Nachtlicht 10 befindet. Wenn der Geräuschsensor oder der Bewegungssensor ein Geräusch bzw. eine Bewegung feststellen, übermitteln sie ein entsprechendes Signal an die Schaltung 20, die daraufhin das Leuchtmittel 11 einschaltet und den Raum damit erhellt.

Die erfindungsgemäße Nachtlichteinrichtung begünstigt in besonders vorteilhafter Weise das Einschlafverhalten des Kindes, in dessen Schlafzimmer sich das Nachtlicht befindet. Nach entsprechender Programmierung der Leuchtdauer Δt und ggf. der Anfangslichtstärke L1 und der Endlichtstärke L2 (Fig. 3) wird das Leuchtmittel 11 gesteuert von der Dimmerschaltung 21 kontinuierlich dunkler, wobei der gewählte, exponentielle Verlauf der Leuchtstärke die Zirbeldrüse im Gehirn des Kindes anspricht, die dann einen Stoff ausschüttet, der das Kind müde werden und einschlafen läßt. Sollte das Kind nachts aufwachen und dabei schreien oder sonst ein Geräusch machen, wird dieses von dem Geräuschsensor 23 erfaßt, woraufhin die Schaltung 20 als Reaktion auf das Geräuschsignal das Leuchtmittel 11 wieder einschaltet, so daß das Kind die ihm gewohnte Umgebung erkennen kann und sich wieder beruhigt. Das Leuchtmittel wird dann wiederum über den vorbestimmten Zeitraum Δt gedimmt, wobei das Kind wieder einschläft. In ähnlicher Weise wird auch infolge einer von dem Bewegungssensor 24 festgestellten Bewegung im Raum das Leuchtmittel 11 eingeschaltet, beispielsweise, wenn die Eltern des Kindes in dessen Schlafzimmer treten, um nach ihrem Kind zu sehen oder wenn das Kind selbst aufsteht, um ins Badezimmer od.dgl zu gehen.

Der Geräuschsensor 23 ist zusätzlich noch mit einem kleinen Sender 25 gekoppelt, dessen Signale von einem Empfänger empfangen werden können, der sich beispielsweise bei den Eltern des Kindes im Wohnzimmer befindet. Die Eltern können auf diese Weise auch in größerer Entfernung hören, wenn ihr Kind erwacht und schreit.

Die Erfindung ist nicht auf das dargestellte und beschriebene Ausführungsbeispiel beschränkt, sondern es sind verschiedene Anderungen und Ergänzungen möglich, ohne den Rahmen der Erfindung zu verlassen. So ist es ohne weiteres möglich, das Leuchtmittel wie in Fig. 1 dargestellt unmittelbar an dem die Schaltung aufnehmenden Sockel anzuordnen, sondern es ist auch denkbar, die Schaltung in einem kleinen, separaten Gehäuse vorzusehen, das zwischen eine schon vorhandene Nachttischlampe und die Steckdose eingeschaltet wird.

## Patentansprüche

1. Nachtlichteinrichtung, insbesondere für Kinder, mit mindestens einem Leuchtmittel, **gekennzeichnet durch** eine die Lichtintensität (L) des Leuchtmittels (11) während eines vorbestimmten Zeitraums (Δt) verringernde Dimmerschaltung (21).

2. Einrichtung nach Anspruch 1, **dadurch gekennzeichnet, daß** der Zeitraum (Δt) einstellbar ist.

3. Einrichtung nach Anspruch 1 oder 2, **dadurch gekennzeichnet, daß** die Lichtintensität (L) des Leuchtmittels (11) zu Beginn und/oder am Ende des Zeitraums (Δt) einstellbar ist.

4. Einrichtung nach einem der Ansprüche 1 bis 3, **dadurch gekennzeichnet, daß** das Leuchtmittel (11) an einem die Dimmerschaltung (21) aufnehmenden Gehäuse (13) angeordnet ist.

5. Einrichtung nach einem der Ansprüche 1 bis 4, **dadurch gekennzeichnet, daß** sie mit einem Anschluß für das extern angeordnete Leuchtmittel (11) versehen ist.

6. Einrichtung nach einem der Ansprüche 1 bis 5, **gekennzeichnet durch** einen auf das Leuchtmittel (11) wirkenden Geräuschsensor (23).

7. Einrichtung nach einem der Ansprüche 1 bis 6, **dadurch gekennzeichnet, daß** die Ansprechschwelle des Geräuschsensors (23) einstellbar ist.

8. Einrichtung nach einem der Ansprüche 1 bis 7, **gekennzeichnet durch** eine Lichtweckerschaltung (22).

9. Einrichtung nach einem der Ansprüche 1 bis 8, **dadurch gekennzeichnet, daß** der Geräuschsensor (23) einer Geräusch-Oberwachungsvorrichtung (25) zugeordnet ist.

10. Einrichtung nach einem der Ansprüche 1 bis 9, **gekennzeichnet durch** einen auf das Leuchtmittel (11) wirkenden Bewegungssensor (24).
